Europäisches Patentamt

European Patent Office

Office européen des brevets

(11) Publication number: **0 157 158**
**B1**

(12) EUROPEAN PATENT SPECIFICATION

(45) Date of publication of patent specification: **31.01.90**

(51) Int. Cl.⁵: **B 60 T 11/20, B 60 T 11/34**

(21) Application number: **85102021.4**

(22) Date of filing: **23.02.85**

(54) Master cylinder and proportioning valve therefore.

(30) Priority: **02.04.84 US 596177**

(43) Date of publication of application:
**09.10.85 Bulletin 85/41**

(45) Publication of the grant of the patent:
**31.01.90 Bulletin 90/05**

(84) Designated Contracting States:
**DE FR GB IT**

(56) References cited:
**EP-A-0 146 734**
**DE-A-1 907 930**
**DE-A-3 310 082**
**GB-A-2 042 662**

**PATENT ABSTRACTS OF JAPAN, vol. 4, no. 37
(M-4)519r, 27th March 1980; & JP - A - 55 8901
(NISSAN) 22-01-1980**

(73) Proprietor: **ALLIED-SIGNAL INC. (a Delaware
corporation)
Columbia Road and Park Avenue P.O. Box 2245R
Morristown New Jersey 07960 (US)**

(72) Inventor: **Fulmer, Keith H.
15688 Kern Road
Mishawaka Indiana 46544 (US)**

(74) Representative: **Lejet, Christian
BENDIX FRANCE Division Technique Service
Brevets Bendix Europe 126 rue de Stalingrad
F-93700 Drancy (FR)**

Courier Press, Leamington Spa, England.

## Description

The present invention relates to a master cylinder and proportioning valve therefore and, in particular, a proportioning valve which is rendered inoperable in response to the position of a piston for the master cylinder.

A screw-in proportioning valve is disclosed in US—A—4,213,655. This proportioning valve is adapted to threadably couple with the master cylinder housing so that a valve member cooperates with a poppet to control fluid pressure communication through the proportioning valve. The proportioning valve is insensitive to piston movement in the master cylinder bore so that even if a failure occurs in a separate brake circuit, the proportioning valve is operable to reduce brake fluid pressure in its associated brake circuit. In US—A—3,686,864, a warning circuit is utilized to bypass a proportioning valve.

From EP—A—0 146 734, which forms part of the State of the Art according to Article 54(3) EPC, it is known a master cylinder and proportioning valve assembly comprising a housing defining a bore movably receiving a pair of pistons in cooperation with the housing to form a pair of pressure chambers communicating with brake circuits via outlet ports, the proportioning valve assembly being operatively connected with the housing via one of the outlet ports so that fluid pressure from one of the pressure chambers is communicated directly to the proportioning valve assembly during braking, the proportioning valve assembly including a valve member movable relative to the housing and defining a valve member opening therethrough for communicating fluid pressure from said one pressure chamber to an associated brake circuit, and a poppet cooperating with the valve member to alter fluid communication through the valve member opening in response to the movement of the valve member, the poppet being mechanically engageable with one of said pair of pistons to move away from a rest position to a bypass position wherein fluid pressure communication through the valve member opening is substantially unrestricted regardless of the position of the valve member relative to the housing.

It is the object of the present invention that the poppet interferes with movement of the piston only when the piston has moved beyond a normal travel during braking. This object is achieved by the features of claim 1.

This object is achieved by the features of claim 1.

According to the present invention, the poppet is pivotably mounted in the proportioning valve assembly.

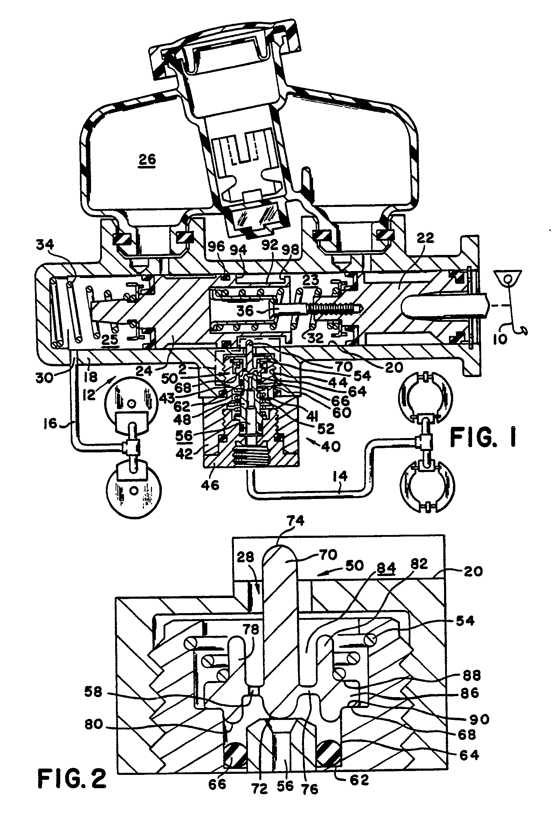

In the drawings, Figure 1 is a cross sectional view of a master cylinder and proportioning valve in a brake system, and Figure 2 is an enlarged view of the circumscribed portion in Figure 1.

A brake system for a vehicle includes a brake pedal 10 coupled to a master cylinder 12 in order to communicate fluid pressure to brake circuits 14 and 16 during braking. The master cylinder 12 includes a housing 18 with a bore 20 receiving a primary piston 22 and a secondary piston 24. A pair of pressure chambers 23 and 25 are formed within bore 20. The bore 20 is in communication with a reservoir 26 in a rest position for pistons 22 and 24 and the bore communicates via outlet ports 28 and 30 with brake circuits 14 and 16, respectively. A pair of return springs 32 and 34 bias the pistons 22 and 24 to their rest positions while a top hat assembly 36 is disposed between the pistons to control the spacing therebetween in the rest position.

The outlet port 28 threadably receives a proportioning valve 40 so that fluid pressure communicated to brake circuit 14 is communicated through the proportioning valve 40. The proportioning valve includes a body 42 with a threaded end 44 coupled to housing 18 at port 28, a plug 46 coupled to the body 42, a valve member 48 extending between the body and the plug, and a poppet 50 opposing the valve member. A first spring 52 biases the valve member to its rest position abutting the plug 46 while a second spring 54 biases the poppet to its rest position abutting the body 42. The valve member 48 is provided with an opening 56 and the poppet is apertured at 58 so that fluid pressure communicates from the bore 20 to the brake circuit 14. The body 42 defines a first surface 60 slidably engaging the valve member 48, a first shoulder 62 adjoining surface 60, a second surface 64 spaced from valve member 48 to define a space for O-ring seal 66, and a second shoulder 68 engageable with the poppet 50.

The poppet 50 includes a central stem 70 with a first end 72 adjacent the opening 56 and a second end 74 extending inwardly from port 28 into the bore 20. A web 76 extends outwardly from the stem 70 to define the aperture (or apertures) 58 and connect with a cylindrical skirt 78. The skirt 78 defines a first end 80 extending outwardly past the second shoulder 68 to oppose inward movement of seal 66. The first end 80 is also engageable with the second surface 64 to center the stem 70 relative to the valve member opening 56. The skirt 78 defines a second end 82 extending inwardly from the web 76 to keep the spring 54 away from aperture 58 so that a channel 84 between the second end 82 and the stem provides unrestricted communication between the bore 20 and the aperture 58. The skirt is provided with an outwardly extending rim 86 having an inner surface 88 forming a stop for the second spring 54 and an outer surface 90 normally in abutment with the body second shoulder 68.

The master cylinder piston 24 forms a groove 92 on the end adjacent piston 22. The groove 92 extends from a first side 94 adjacent piston seal 96 to a second side 98. In the rest position for the piston 24, the poppet stem 70 extends into the groove 92 adjacent the side 94.

During normal braking, the brake pedal 10 is depressed to move piston 22 toward piston 24. Both pistons are moved in the bore to close the bore to the reservoir 26 and generate fluid pressure in the chambers formed by the pistons. As a result, fluid pressure is communicated from the bore to the brake circuits 14 and 16 to effectuate a brake application. So long as the fluid pressure in brake circuit 14 remains below a predetermined valve, the valve member of the proportioning valve 40 will remain sufficiently spaced from the poppet 50 so that fluid communication via aperture 58 and opening 56 is uninterrupted. Above the predetermined value, the valve member is pressure responsive in a well known manner to move towards the poppet 50 so that the poppet first end 72 cooperates with the bottom end of the valve member to close the opening 56. As a result, the fluid pressure downstream of the valve member is less than the fluid pressure developed in the bore 20.

In a fully braked position, the fluid pressure in chamber 25 prevents further movement of piston 24 while the fluid pressure in chamber 23 prevents further movement of piston 22. With fluid pressure retained in chamber 25, the piston 24 is displaced to contract spring 34 such that poppet stem 70 remains in the groove, albeit spaced from the rest position, in spaced relation to the end 98. If the brake circuit 16 develops a leak, the chamber 25 will not retain fluid pressure so that the piston 24 will move to an end of bore 20 to engage the side 98 with the poppet stem 70 and pivot the latter about the left edge of outer surface 90. The pivoted poppet displaces the first end 72 away from the valve member to a bypass position so that when the valve member moves toward the poppet in response to fluid pressure in circuit 14, the first end 72 will remain sufficiently spaced therefrom to permit unrestricted fluid communication between the bore 20 and the circuit 14. A shoulder 41 on the valve member 40 abuts a shoulder 43 on the body 42 to limit movement of the valve member in the direction of the poppet 50. The poppet first end 72 will be pivoted to a position spaced from the valve member even with the latter abutting the shoulder 43 so long as the piston 24 is fully stroked in response to a leak of failure in circuit 16. Once the leak is repaired, the piston 24 will generate fluid pressure in chamber 25 so that the travel for piston 24 will be limited by fluid pressure in chamber 24 and the piston will remain spaced from the poppet stem 70 to permit normal operation of the proportioning valve 40.

**Claims**

1. A master cylinder and proportioning valve assembly comprising a housing (18) defining a bore (20) movably receiving a pair of pistons (22, 24) in cooperation with the housing to form a pair of pressure chambers (23, 25) communicating with brake circuits (14, 16) via outlet ports (28, 30), the proportioning valve assembly (40) being operatively connected with the housing (18) via one (28) of the outlet ports so that fluid pressure from one (23) of the pressure chambers is communicated directly to the proportioning valve assembly (40) during braking, the proportioning valve asembly including a valve member (48) movable relative to the housing and defining a valve member opening (56) therethrough for communicating fluid pressure from said one pressure chamber (23) to an associated brake circuit (14), and a poppet (50) cooperating with the valve member (48) to alter fluid communication through the valve member opening in response to the movement of the valve member (48), the poppet (50) being pivotably mounted in the proportioning valve assembly (60) and mechanically engageable with one (24) of said pair of pistons (22, 24) to move away from a rest position to a bypass position wherein fluid pressure communication through the valve member opening (56) is substantially unrestricted regardless of the position of the valve member (48) relative to the housing.

2. The master cylinder and proportioning valve of claim 1, wherein the one port (28) communicates the bore (20) with the valve member opening (56) and the poppet (50) includes a stem (70) extending through the one port (28) and into the bore (20), and the stem (70) normally spaced from the housing (18) to permit lateral movement in the one port (28) when the stem (70) is engageable with the piston (24).

3. The master cylinder and proportioning valve of claim 1, wherein the one piston (24) defines a piston groove (92) extending longitudinally, the poppet (50) extending into the bore for disposition within the piston groove (92) and normally in spaced relation to the one piston (24).

4. The master cylinder and proportioning valve of claim 3, wherein the one piston groove (92) extends longitudinally between opposite end walls (94, 98) and the poppet is engageable with one (98) of the end walls when the poppet is in the bypass position.

5. The master cylinder and proportioning valve of claim 1, wherein the proportioning valve (40) includes a body (42) coupled to the housing (18) and the poppet (50) is carried by the body (42) to pivot relative to the body (42) when the poppet (50) is moved from the rest position to the bypass position.

6. The master cylinder and proportioning valve of claim 5, wherein the poppet (50) includes a stem (70) extending from a first end (72) adjacent the valve member (48) to a second end (74) adjacent the one piston (24), and a substantially cylindrical skirt (78) connected to the stem by a web (76), a first end (80) of the skirt (78) cooperating with the body (42) to locate the poppet (50) in the body and a second end (82) of the skirt cooperating with a resilient member (54) which biases the poppet to the rest position.

7. The master cylinder and proportioning valve of claim 6, wherein the skirt (78) includes an outwardly extending ridge (86) normally abutting the body (42) when the poppet is in the rest position and a portion of the ridge pivotally engages the body when the poppet is pivoted to the bypass position.

8. The master cylinder and proportioning valve of claim 6, wherein the web (76) is provided with at least one aperture (58) to communicate fluid pressure from the bore (20) to the valve member opening (56).

9. The master cylinder and proportioning valve of claim 6, wherein the stem (70) is longer from the web (76) to the second end (74) than from the web (76) to the first end (72).

**Patentansprüche**

1. Hauptzylinder und Dosierventileinheit mit einem Gehäuse (18), das eine Bohrung (20) aufweist, die ein Paar von Kolben (22, 24) in Zusammenwirkung mit dem Gehäuse beweglich aufnimmt, so daß ein Paar von Druckkammern (23, 25) gebildet wird, die über Auslaßöffnungen (28, 30) mit Bremskreisen (14, 16) in Verbindung stehen, wobei die Dosierventileinheit (40) über eine (28) der Auslaßöffnungen mit dem Gehäuse (18) in Verbindung steht, so daß Strömungsmitteldruck von einer (23) der Druckkammern während des Bremsens direkt der Dosierventileinheit (40) zugeführt wird, wobei die Dosierventileinheit ein Ventilelement (48) umfaßt, das relativ zum Gehäuse bewegbar ist und durch das sich eine Ventilelementöffnung (56) erstreckt, um Strömungsmitteldruck von der einen Druckkammer (23) einem zugehörigen Bremskreis (14) zuzuführen, und wobei ein Tellerventil (50) mit dem Ventilelement (48) zusammenwirkt, um die Strömungsmittelverbindung durch die Ventilelementöffnung in Abhängigkeit von einer Bewegung des Ventilelementes (48) zu verändern, wobei das Tellerventil (50) schwenkbar in der Dosierventileinheit (60) montiert und mechanisch mit einem (24) aus dem Paar der Kolben (22, 24) in Eingriff bringbar ist, um sich von einer Ruheposition in eine Bypass-Position wegzubewegen, in der die Strömungsmittelverbindung durch die Ventilelementöffnung (56) unabhängig von der Position des Ventilelementes (48) relativ zum Gehäuse im wesentlichen ungedrosselt ist.

2. Hauptzylinder und Dosierventil nach Anspruch 1, bei denen die eine Öffnung (28) die Bohrung (20) mit der Ventilelementsöffnung (56) verbindet und das Tellerventil (50) einen Schaft (70) aufweist, der sich durch die eine Öffnung (28) in die Bohrung (20) erstreckt, wobei der normalerweise im Abstand vom Gehäuse (18) angeordnete Schaft (70) eine seitliche Bewegung in der einen Öffnung (28) gestattet, wenn der Schaft (70) mit dem Kolben (24) in Eingriff bringbar ist.

3. Hauptzylinder und Dosierventil nach Anspruch 1, bei denen die eine Kolben (24) eine Kolbennut (92) aufweist, die sich in Längsrichtung erstreckt, und sich das Tellerventil (50) in die Bohrung erstreckt und in der Kolbennut (92) angeordnet ist sowie sich normalerweise im Abstand zu dem einen Kolben (24) befindet.

4. Hauptzylinder und Dosierventil nach Anspruch 3, bei denen sich die Kolbennut (92) in Längsrichtung zwischen gegenüberliegenden Endwänden (94, 98) erstreckt und das Tellerventil mit einer (98) der Endwände in Eingriff bringbar ist, wenn sich das Tellerventil in der Bypass-Position befindet.

5. Hauptzylinder und Dosierventil nach Anspruch 1, bei denen das Dosierventil (40) einen Hauptteil (42) umfaßt, der mit dem Gehäuse (18) gekoppelt ist, und das Tellerventil (50) vom Hauptteil (42) getragen wird, so daß eine Verschwenkung relativ zum Hauptteil (42) möglich ist, wenn das Tellerventil (50) aus der Ruheposition in die Bypass-Position bewegt wird.

6. Hauptzylinder und Dosierventil nach Anspruch 5, bei denen das Tellerventil (50) einen Schaft (70) aufweist, der sich von einem ersten Ende (72) benachbart zum Ventilelement (48) bis zu einem zweiten Ende (74) benachbart zu dem einen Kolben (24) erstreckt, sowie einen im wesentlichen zylindrischen Saum (78), der über einen Steg (76) mit dem Schaft verbunden ist, wobei ein erstes Ende (80) des Saumes (78) mit dem Hauptteil (42) zusammenwirkt, um das Tellerventil (50) im Hauptteil örtlich festzulegen, und wobei ein zweites Ende (82) des Saumes mit einem elastischen Element (54) zusammenwirkt, das das Tellerventil in die Ruheposition vorspannt.

7. Hauptzylinder und Dosierventil nach Anspruch 6, bei denen der Saum (78) eine auswärts verlaufende Rippe (86) aufweist, die normalerweise an das Hauptteil (42) stößt, wenn sich das Tellerventil in der Ruheposition befindet, und bei denen ein Abschnitt der Rippe schwenkbar mit dem Hauptteil in Eingriff tritt, wenn das Tellerventil in die Bypass-Position verschwenkt wird.

8. Hauptzylinder und Dosierventil nach Anspruch 6, bei denen der Steg (76) mit mindestens einer Öffnung (58) versehen ist, um Strömungsmitteldruck aus der Bohrung (20) zur Ventilelementsöffnung (56) zu leiten.

9. Hauptzylinder und Dosierventil nach Anspruch 6, bei denen der Schaft (70) vom Steg (76) bis zum zweiten Ende (74) länger ist als vom Steg (76) bis zum ersten Ende (72).

**Revendications**

1. Ensemble maître cylindre et soupape de répartition comprenant un carter (18) définissant un alésage (20) recevant un jeu de deux pistons (22, 24) formant conjointement avec le carter deux chambres de pression (23, 25) communiquant avec les circuits de freins (14, 16) par des orifices de sortie (28, 30), l'ensemble de soupape de répartition (40) étant reliée au carter (18) via un (28) des orifices de sortie afin que la pression du fluide de fluide de l'une (23) des chambres de pression soit transmise directement à l'ensemble de soupape (40) au cours du freinage, l'ensemble de soupape incluant un organe de soupape (48) se déplaçant par rapport au carter et compreune ouverture (56) afin de transmettre la pression du fluide de la chambre de pression (23) à un circuit de freinage associé (14), et un clapet en champignon (50) agissant conjointement avec l'organe de soupape (48) afin de modifier la transmission du fluide à travers l'ouverture de l'organe de soupape en réponse au mouvement de l'organe de soupape (48), le clapet (50) étant monté pivotant dans la soupape de répartition (40) et pouvant s'engager mécaniquement avec un piston (24) du jeu de pistons (22, 24) pour se déplacer et s'éloigner de la position de repos à une position de by-pass dans laquelle la transmission du fluide à travers l'ouverture (56) se fait librement quelle que soit la position de l'organe de soupape (48) par rapport au carter.

2. Ensemble maître cylindre et soupape de répartition selon la revendication 1, dans lequel l'orifice (28) fait communiquer l'alésage (20) avec l'ouverture (56) de l'organe de soupape et le clapet (50) comprend une tige (70) traversant l'ouverture (28) et dans l'alésage (20), la tige (70) étant normalement espacée par rapport au carter (18) pour permettre le déplacement latéral dans l'une des ouvertures (28) lorsque la tige (70) s'engage avec le piston (24).

3. Ensemble maître cylindre et soupape de répartition selon la revendication 1, dans lequel le piston (24) comprend une glissière longitudinale (92), le clapet (50) s'étendant dans l'alésage (20) pour se placer dans la glissière (92) et restant normalement espacé par rapport au piston (24).

4. Ensemble maître cylindre et soupape de répartition selon la revendication 3, dans lequel la glissière du piston (92) s'étend longitudinalement entre les parois d'extrémité opposées (94, 98) et dans lequel le clapet peut s'engager avec une (98) de ces parois lorsque le clapet se trouve en position de by-pass.

5. Ensemble maître cylindre et soupape de répartition selon la revendication 1, dans lequel la soupape de répartition (40) comprend un corps (42) couplé au carter (18) et le clapet (50) est porté par le corps (42) afin de pivoter par rapport à ce dernier lorsqu'il est déplacé de sa position de repos a la position by-pass.

6. Ensemble maître cylindre et soupape de répartition selon la revendication 5, dans lequel le clapet (50) comprend une tige (70) pourvu d'une extrémité (72) adjacente à l'organe de soupape (48) et d'une seconde extrémité (74) adjacente au piston (24), et une jupe (78) de forme pratiquement cylindrique reliée à la tige (70) par un flasque (76), une première extrémité (80) de la jupe (78) agissant conjointement avec le corps (42) pour placer le clapet (50) dans le corps et une seconde extrémité (82) de la jupe agissant conjointement avec un élément élastique (54) qui dévie le clapet à sa position de repos.

7. Ensemble maître cylindre et soupape de répartition selon la revendication 6, dans lequel la jupe (78) inclut un renfort (86) qui s'étend vers l'extérieur butant normalement contre le corps (42) lorsque le clapet est dans sa position de repos et qu'une partie du renfort engage par pivotement le corps lorsque le clapet est pivoté dans sa position de by-pass.

8. Ensemble maître cylindre et soupape de répartition selon la revendication 6, dans lequel le flasque (76) est pouru d'au moins une ouverture (58) afin de transmettre la pression du fluide de l'alésage (20) à l'ouverture de l'organe de soupape (56).

9. Ensemble maître cylindre et soupape de répartition selon la revendication 6, dans lequel la tige (70) est plus longue du flasque (76) à sa seconde extrémité (74) que du flasque (76) à sa première extrémité (72).

FIG. I

FIG. 2